# EUROPEAN PATENT APPLICATION

(11) **EP 1 798 691 A2**
(43) Date of publication of application: **20.06.2007**
(21) Application number: 07007049.5
(22) Date of filing: 15.03.2004
(51) Int. Cl.: G06T 15/20

(54) **Method and apparatus for generating a desired view of a scene from a selected viewpoint**

(30) Priority: 14.03.2003 GB 0305926
(62) Divisional of application: 04251470.3
(71) Applicant: BRITISH BROADCASTING CORPORATION, London W1A 1AA (GB)
(72) Inventor: Thomas, Graham, Surrey KT 20 6NP (GB); Brightwell, Peter, Surrey KT 20 6NP (GB); Grau, Oliver, Surrey KT 20 6NP (GB)
(74) Representative: Garratt, Peter Douglas

(57) **Abstract**

A method for generating a desired view of a real scene from a selected desired viewpoint by identifying objects in a real image, determining the positions of the identified objects, and rendering a view of the scene from a selected viewpoint using image data from the real image to render at least some of the identified objects. Other portions of the rendered view can be rendered using other source data which may be generic or historic. Identified objects may be tracked over a period of time to determine a trajectory or path. A user interface can be provided to assist in object tracking. A number of cameras can be used to provide a number of real images, and certain cameras may be controlled using the parameters of other cameras.

## Description

This invention relates to video processing, and more specifically to virtual image production. The present invention may be used in a number of different areas of video and image production, but is particularly applicable in the field of television sports coverage.

The use of virtual reality techniques is becoming increasingly common in television and video production, however application in sports coverage is at present relatively limited. Replays, slow motion and detailed analysis of sports events are popular, and there is a growing desire to be able to provide computer enhanced images and sequences for these purposes. A wide variety of virtual techniques have been proposed in the field of video and television production.

Examples of prior art techniques in the field of sports coverage include the Epsis system produced by Symah Vision, which is regularly used to provide tied-to-pitch logos, scores, distance lines, etc. for football, rugby, and other sports. This system is limited however to relatively simple graphics, and works with a camera at a fixed position. It would be desirable to provide more sophisticated image and video manipulations of live action events such as sports coverage.

An example of a desirable effect would be to provide the viewer with a specific view of a scene, such as a view along a finish line or an offside line. In the case of a static finish line the solution of arranging a camera looking along that line is trivial. Where desirable views cannot be predetermined (such as an offside line) a number of possible approaches have been proposed.

Arranging a multitude of cameras along the side of the pitch, so that one camera will give approximately the desired view is one such proposal. EyeVision from Princeton Video International [http://www.pvi-inc.com/] uses this approach with cameras typically arranged in a circle or arc. However the large number of cameras required to achieve a sufficiently precise view makes this solution too costly or impractical for many events.

A moving camera is an alternative proposal. A number of systems exist for cameras on rails and wires (e.g. [www.aerialcamerasystems.com], however it cannot be guaranteed that the camera will be in the right place in the right time to produce the desired image, and the producer cannot change his/her mind after the event.

Another approach is provided by Orad's Virtual Replay system [www.orad.co.il]. This uses image-processing based techniques including white-line matching to determine the camera parameters and player tracking, and renders a complete virtual image of the scene including the pitch, stadium and players as 3D graphics. This is an expensive solution, and quite slow in use. A particular disadvantage of this system for sports coverage is that the virtual players may be considered to look too generic, and that a large amount of detail in a scene may be lost when scenes are rendered. It is recognised, however, that the intention of this system is not to provide a realistic image and there may be some attractions to the "computer game" image generated.

A further approach is disclosed in US-A-4,956,706. This provides a method of manipulating a camera image to form a view of a scene from a greater elevation than that of the camera image. This is done by calculating a planar model of the scene, and applying the camera image to this model by using a stretch transformation. In order to compensate for items having any significant height, the planar model can be locally deformed by defining a deformation vector and a point of action on the planar model. This method is intended to be used with generally planar scenes where a low level of detail is required, for example an overhead view of a golf course, and hence is not intrinsically applicable to providing a virtual viewpoint of a generalised 3-D scene, which would require the entire planar model to be substantially deformed in a very complex manner. It is not disclosed how to determine which picture areas require local deformation, which apparently requires manual identification. This would not be practicable for a dynamically changing scene.

It is an aspect of the present invention to provide apparatus for tracking selected objects in a scene comprising:
one or more cameras arranged to obtain one or more real scene images;
image processing means for identifying said selected objects in said one or more real scene images;
means for providing an estimate of the three-dimensional spatial position of said one or more selected objects based on their position in the one or more real scene images; and
a user interface adapted to allow an operator to view said estimate of the position of selected objects in a real scene image, said user interface including input means to allow an operator to modify said estimate.

This novel apparatus reduces the demands on an operator by providing an automatic estimate of position, while at the same time allowing a degree of human intervention in cases where the estimate is incorrect, or when no estimate can be produced. A variable degree of control may be provided to the operator.

It is possible to provide an automatic estimate of position using a single image of a scene when an estimate based on an assumption about a constraint can be made. One such assumption is that selected objects are in contact with the ground, or constrained to a reference surface. Assumptions about the size or shape of a selected object can also be used in some circumstances, for example assuming the height of a player in a sports match.

Preferably a plurality of cameras is used to obtain a plurality of real scene images, each said image corresponding to a different viewpoint. This allows a more accurate estimate of the position of objects, particularly in cases where objects are obscured from certain views.

Where multiple real cameras are used it is desirable that the user interface allows an operator to view images from more than one camera simultaneously. Preferably the user interface provides the operator with an automatic estimate of the three dimensional position of selected objects in the real scene derived from one or more real scene images, through the use of simultaneous displays. In this way an operator may correct or adjust the automatic estimate, preferably by interaction with one of the displayed real scene images.

The user interface preferably also allows the operator to select real scene images which should be used to track and locate selected objects. In this way information from a camera pointing in a direction which is not useful for object tracking (eg. a camera pointing at the crowd in a football match) can be selectively disregarded. The same user interface may desirably be used to control the operation of slave cameras by selecting which real cameras should provide control information to a given slave camera.

In a particular embodiment of the invention used in television production of sports matches, and in particular football, it is desirable to obtain an estimate of the position of the ball in the scene. Obtaining an accurate estimate has proved to be difficult in the past, on account of the fact that the ball is relatively small, and is not always on the ground. The user interface may advantageously be adapted to provide an improved estimate of the ball position based on images of the ball from cameras, and operator inputs. In one embodiment the user can input the location of the ball in two or more camera images to allow an estimate of position to be determined, or an estimate of the position may be presented for user selection or refinement. In an extension of this idea, the trajectory of a ball in flight can be estimated based on user defined positions of a start point and an end point of the ball's flight, and using standard calculation techniques assuming a parabolic flight. A further improvement of this feature could take into account air resistance acting on the ball.

Various embodiments of the invention will now be described by way of example with reference to the accompanying drawings in which:
Figures 1a and 1b show methods of rendering a 2D image obtained from a real camera from the point of view of a virtual camera.
Figures 2a and 2b show an alternative method of rendering a 2D image.
Figures 3a and 3b show an example of an object being obscured from a viewpoint.
Figure 4 illustrates multiple cameras being used to allow images from a range of desired positions to be rendered.
Figure 5 illustrates a multiple camera approach used in conjunction with the rendering technique of Figure 2
Figure 6 shows a camera arrangement suitable for a football game.
Figures 7a and 7b illustrate one possible source of error in a camera tracking and positioning system.
Figure 8 shows an example of a visual hull produced for a selected object.
Figures 9 and 10 are examples of possible screen outputs for one embodiment of a user interface according to an aspect of the invention.
Figure 11 is a schematic illustration of a system according to one embodiment of the present invention

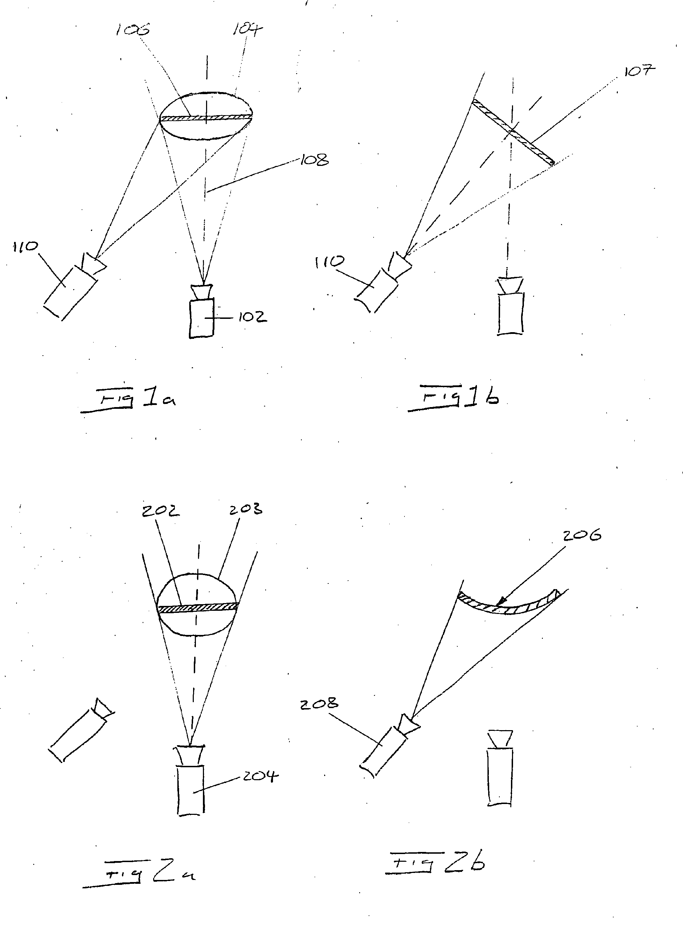

It can be seen in Figure 1a that using a single real camera 102 we can model a selected object 104 most simply as a 2-D plane 106 at right angles to the real camera axis 108. The images from the real camera are rendered as a flat texture from the position of the virtual camera 110. An observer at the virtual view point sees the virtual object as a "cardboard cut-out". This approach works reasonably well when the difference between the real and virtual camera angles is up to about 30 degrees, beyond which the distortion becomes too apparent.

A variation of the 2-D approach is illustrated in Figure 1b, in which the planes modelling selected objects are rotated to a suitable angle 107. In some situations this may give a better virtual view, for example where the angle of view of the main camera is relatively narrow (otherwise the 2-D image will not have enough horizontal resolution), and the 2-D image is approximately perpendicular to the virtual camera 110.

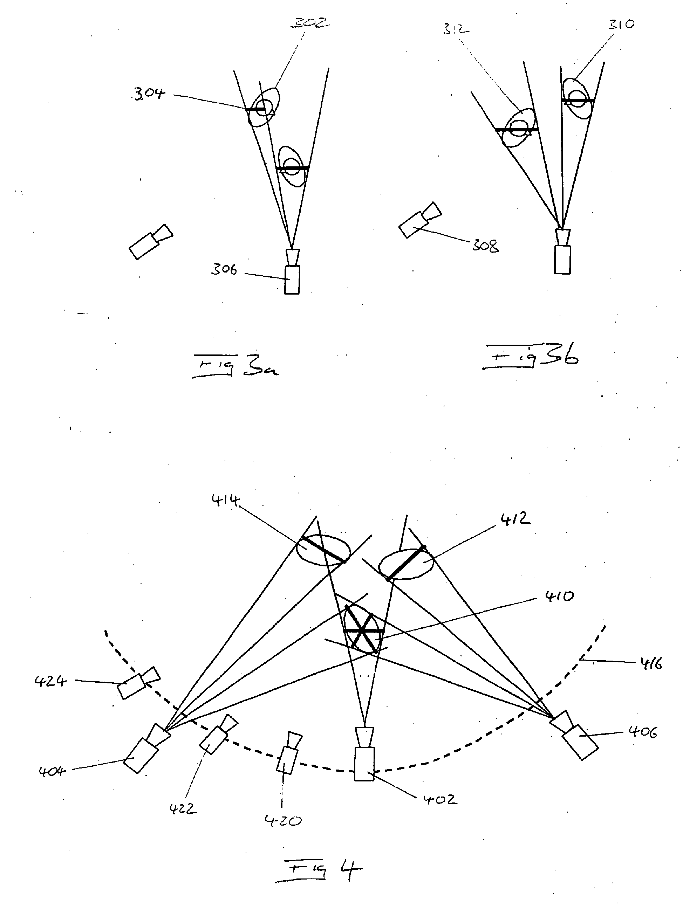

A "2½-D" approach is illustrated in Figures 2a and 2b. A 2-D image 202 of an object 203 is obtained from a real camera 204 as shown in Figure 2a. Image 202 is then mapped onto a 3-D curved surface 206 as shown in Figure 2b. This 3-D surface model is then rendered from the position of a virtual camera 208.

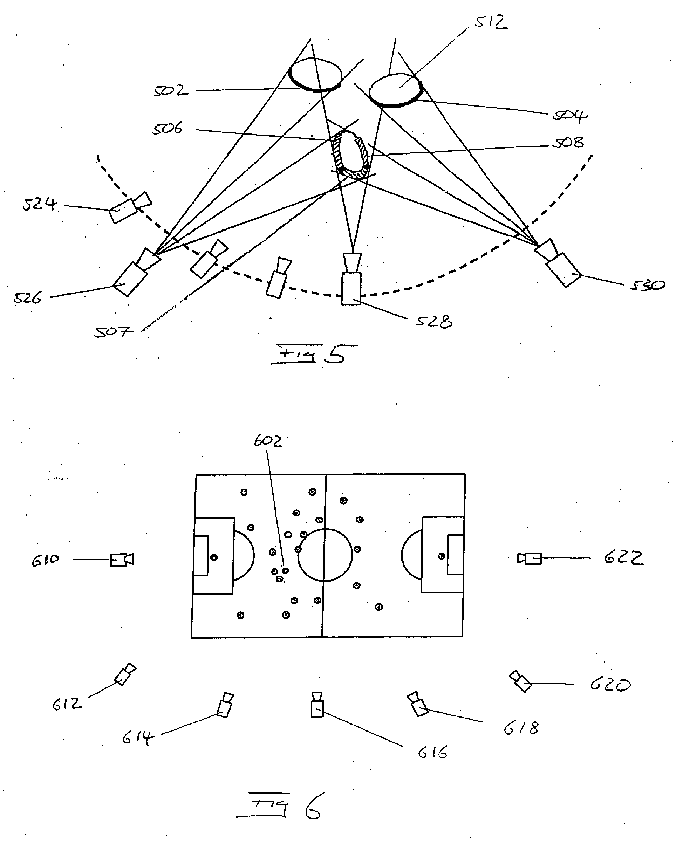

The single camera approach will often be limited where one object obscures another. This is shown in Figure 3a, where object 302 cannot be rendered properly from many virtual camera angles based on the 2-D image 304 obtained from real camera 306. For games such as fifteen-a-side rugby this will be the case for a significant proportion of the time for typical camera angles. A higher camera position will reduce the amount of overlap, but this will increase the distortion of the rendered players, and such a position may not be available. Of course the situation shown in Figure 3b is perfectly acceptable, and the rendered view from virtual camera 308 will show object 310 partially obscured by object 312.

It may be possible to synthesise missing object image information by using scene images from preceding or following frames. At its simplest, this would involve simply displacing the 2-D or 2½-D textures from the previous frame to match the current position of the object. However, this should not be used where it is important to have an accurate representation of the scene, for instance to show a controversial offside decision. Alternatively motion-compensated prediction could be used on the input video to generate the missing information. This is only likely to work reasonably when the player has been obscured for a few frames. A possibly better approach may be to try to match the missing information to something similar in another part of the frame. Unlike conventional motion estimation techniques such as block matching, the match is not assumed to be near the missing information. So a missing portion of a player's arm, for example, might be replaced by a similar-looking portion of someone else's arm. It has been proposed to use this approach with a method called "long-range correlation" to give impressive results for image restoration and error concealment. For matching large areas a hierarchical matching system could be used to reduce the computational requirements. This algorithm assumes that the missing area is to be matched with an area the same size and shape. It may also be possible to match with a different sized area using techniques suitable for fractal image coding.

Long-range correlation or fractal matching methods could be extended to search in other frames if necessary. Alternatively, in the example of a football game for example, a match could be performed against a "library" of player images which could be prepared before the game, or built up as the game progresses.

Even if one or more of the above methods are used to reconstruct the obscured parts, it is still necessary to know which parts are missing. This could be performed using segmentation methods, by inter-frame differences, or by some combination, but it is likely to be difficult in some cases, especially when two overlapping objects have a similar appearance, and therefore it is desirable to provide some user intervention.

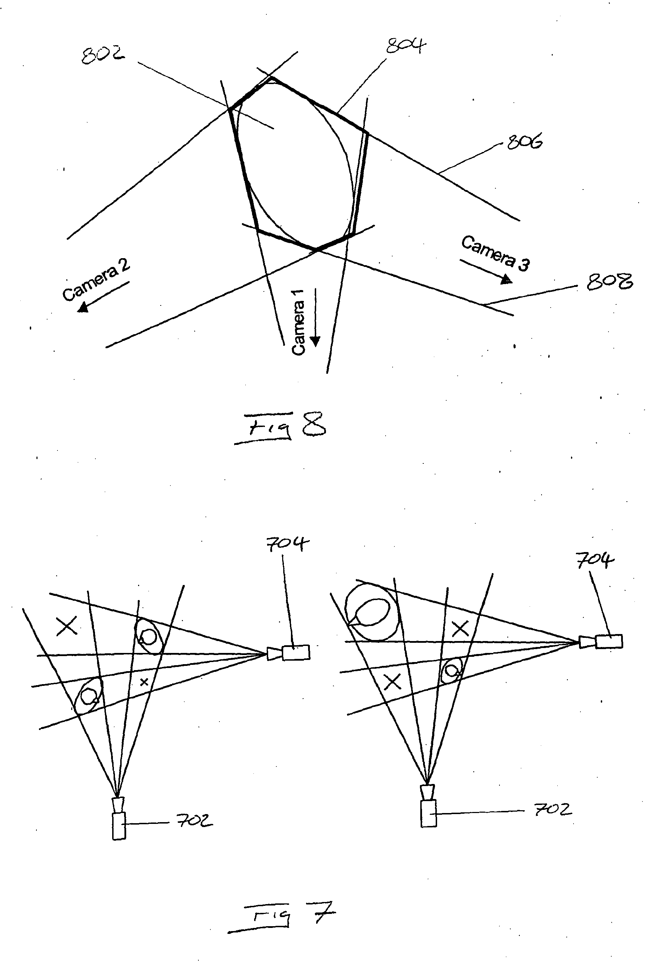

Figure 4 shows one possible multi-camera arrangement that would be suitable for a football match rigged with a camera 402 on the centre line and one on each of the 18-yard lines (404 & 406). Each of players 410, 412 and 414 can be seen unobscured from at least one real camera. Player 410 can be rendered from a reasonable angle by a virtual camera at any point along path 416, by using the 2-D technique described above from the most appropriate camera.

For a view from virtual camera 420, player 410 is rendered using the video from camera 402 and for a view from virtual camera 422, player 410 is rendered using the video from camera 404. At some point between virtual camera positions 420 and 422 there will be a noticeable switching effect. Alternatively a cross-fade between the two camera views could be used although is arguably less acceptable to the viewer. "Motion"-compensated interpolation could be employed to interpolate between the views from two positions, although this has typically required a lot of hand-crafting in the post processing so is not suitable for live use.

However, even with three cameras, there are still problems. It will not be possible to obtain a good view of player 412 from a virtual camera on the left hand side of path 416, because only camera 406 provides a full real view. In views from virtual cameras 420 and 422, player 412 is obscured by player 410, but at in a view from virtual camera 424 player 412 can be seen. To prevent unwanted distortions, players can be "faded out" as the angle of the virtual camera becomes to great.

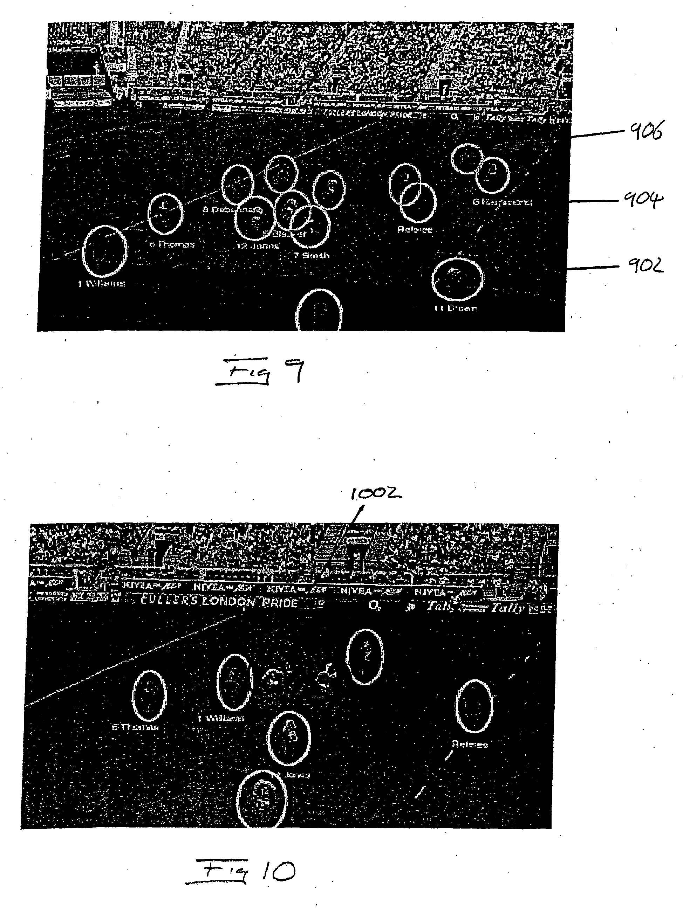

Figure 5 illustrates a multiple camera set up using the "2½-D" approach. As described previously, real image segments (eg. 502, 504) are mapped onto 3D surfaces as textures. More than one real image segment derived from more than one real camera can be mapped onto a single 3D surface representing a selected object or player. This is the case for player 510, where image segments 506, 507 & 508 are derived from cameras 526, 528 & 530 respectively. In Figure 5 the virtual view of player 512 might just be acceptable in a view from virtual camera 524. However in general, more than three cameras are likely to be required to provide a good range of reliable virtual camera angles when there are many players on the pitch.

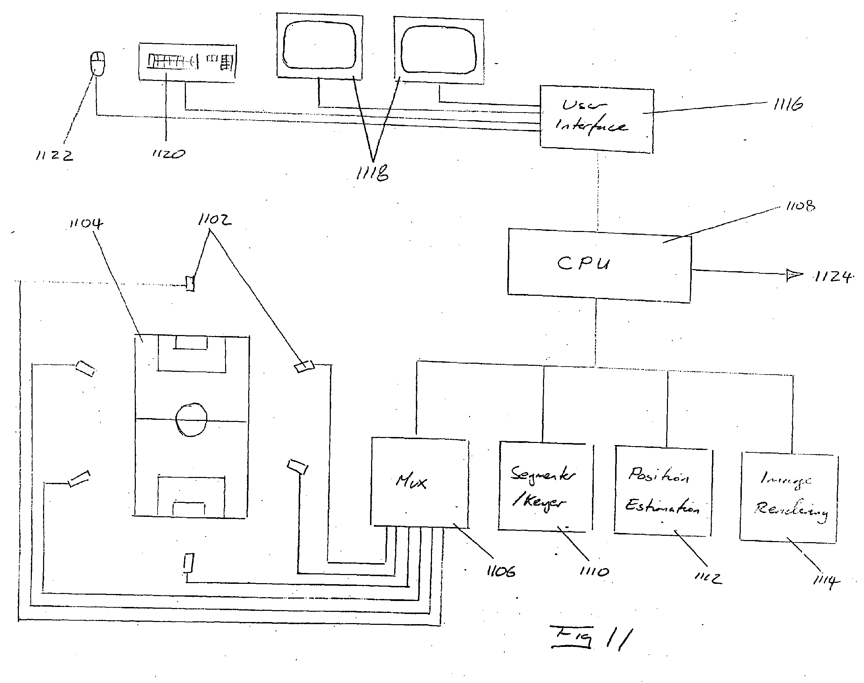

Figure 6 shows seven cameras used at a football match. Most of the 23 players (including referee) can be viewed from most virtual angles (on one side of the pitch), but there are still some exceptions. For instance the player 602 cannot be fully viewed from the bottom left or left. High camera positions will reduce this effect, and are more suitable for player tracking, but will increase the distortion when rendering a virtual camera view from a low angle. In practice it would be best to have a combination of high and low camera angles. In Figure 6 cameras 610, 614, 618 & 622 would typically be mounted at low-level, while cameras 612, 616 & 620 would typically be elevated. If it proves necessary to have more real cameras available than there are camera operators, additional slave cameras could be used. The pan, tilt, zoom and focus of the slave cameras would be set automatically using the settings of the manually operated ones. Certain assumptions will need to be made, for example that the slave cameras should be pointing at the average centre of the real cameras, and focused to a point 1.5 metres above the ground at this point. It will also be necessary to detect when the manual cameras are pointing at something different, e.g. the crowd.

More cameras, especially at different heights, will also help overcome an additional problem exemplified in Figures 7a and 7b. Here it can be seen that if we just use the key information from two real cameras 702 &704, we can interpret the scene in two different ways. To determine the correct interpretation a constraint called "photo-consistency" can be used which uses the image data (not just the key) to estimate the position of selected objects. Techniques to address photo-consistency have previously been proposed, (eg. http:*ll*www.cs.cornell.edu/rdz/Papers/KZ-ECCV02-recon.pdf) but are in general very computer-intensive, although it may be possible to simplify the process in cases such as Figure 7 where there are only two possibilities. Alternative methods of preventing wrong interpretations include making certain assumptions about the sizes of objects, predicting the position and orientation of objects from previous frames; or introducing a degree of manual input. Utilising an additional camera position providing images from an elevated view point makes the disambiguation process easier.

Where more than one camera is used, shape from silhouette techniques can be used to generate approximate 3D volumes for objects in images. We will consider a simple illustration in only two dimensions with two real cameras. The outline of a simple object, such as a circle, will subtend a viewing arc at each viewpoint. The edges of these two viewing arcs intersect at four points that can be joined to form a quadrilateral which is tangent to the circle on each side. In the illustration this quadrilateral shape can be used as the basis of a simple 3D surface onto which an image can be mapped. More complicated shapes, and hence 3D surfaces can be generated with a greater number of real cameras. This technique tends to produce angular shapes and surfaces, which are preferably rounded off.

Figure 8 is a schematic representation of a 'visual hull' constructed for an object 802 viewed from three cameras. Images of object 802 would be rendered as texture onto a shape based on the hexagon 804 bounded by the core of rays (eg. 806 & 808 for camera 3) from the three cameras as shown in Figure 8. A more realistic appearance can be achieved by rounding off the corners of the hexagon. The texture is typically generated from the real camera closest to the virtual viewpoint.

In an example of the invention used in sports coverage, it is desirable to track players automatically, to reduce the demands on the operator. This can be done using the key signal to generate a silhouette and attempting to determine how this changes from frame to frame. However in general player tracking can be difficult, as players change shape and overlap. This is especially true for sports such as rugby, where there are more players and there are frequent tackles, scrums, and rucks, etc.
As the player tracking may fail from time to time, it is desirable to provide a user interface to allow an operator quickly to correct things.

One possible such user interface is exemplified in Figures 9 and 10. The players that the system is tracking and have been previously identified are shown with a white ellipse 902 and the name of the player 904. A yellow ellipse 906 shows players that are being tracked, but have not yet been identified. The operator can click on any player and set the current name. The interface also shows how well the keying works by colouring the player silhouettes magenta. If the operator considers the keying is incorrect, he/she can manually define the edges of the player e.g. by opening a close-up window using the user interface, e.g. by editing a "lasso selection" around the player.

Where the tracking fails, typically because of unresolvable overlaps, a red ellipse 1002 is drawn around the unknown areas, as shown in Figure 10. If appropriate, the operator can then manually draw around each player, otherwise as the players come out of overlap, the operator can wait for the red ellipse to separate into multiple yellow ellipses and identify each. If the operator chooses not to separate the players manually, they could still be rendered as a single texture. In situations where the virtual camera does not move too far this may provide an acceptable result.

In a multiple camera system, the interface could include such a display from each camera, together with a virtual display from above. This would enable the operator to quickly see how well the tracking system is doing, and use the most appropriate view to identify players. Clicking on, or moving the mouse over, a player in one view should highlight the player in all views, and this should make it obvious to the operator where the wrong estimate of position had been made. The user interface could also allow the operator to tell the system to ignore the output from certain cameras, e.g. if they are pointing at the crowd. This information could also be used to tell a system controlling slave cameras to ignore the parameters of irrelevant real cameras.

Figure 11 shows a plurality of cameras 1102 arranged to provide images of a scene 1104 (here a football pitch). The images are fed to a multiplexer 1106, and the to a central processing unit 1108. Also connected to the CPU are an image segmenter / keyer 1110, position estimation means 1112 and image rendering means 1114. A user interface 1116 is provided which may pass data to or from the CPU. The user interface includes multiple screens, and input devices such as a keyboard 1120 and a mouse 1122. In some embodiments the user interface may comprise a PC. An image output 1124 is produced for broadcast or recording.

## Claims

1. Apparatus for tracking selected objects in a scene comprising:
one or more cameras arranged to obtain one or more real scene images;
image processing means for identifying said selected objects in said one or more real scene images;
means for providing an estimate of the position of said one or more selected objects based on their position in the one or more real scene images;
a user interface adapted to allow an operator to view said estimate of the position of selected objects in a real scene image, said user interface including input means to allow an operator to modify said estimate.

2. Apparatus according to Claim 1, wherein real scene images are obtained from a plurality of cameras having different view points.

3. Apparatus according to Claim 2, wherein more than one real scene images from different viewpoints are displayed simultaneously, and wherein said estimate is indicated graphically on more than one real scene image.

4. Apparatus according to any one of Claims 1 to 3, arranged to allow an operator to select those cameras from which real scene images are used to provide said estimate of location.

5. Apparatus according to any one of Claims 1 to 4, arranged to allow an operator to indicate the position of one or more selected objects in one or more real scene images.

6. Apparatus according to any one of Claims 1 to5, arranged to allow an operator to indicate the position of one or more selected objects in a first real scene image, and to display an estimate of the corresponding position of said one or more objects in at least a second real scene image.

7. Apparatus according to Claim 6, including means for estimating the trajectory of a selected object based on an indicated position of the object at a first instant, an indicated position of the object at a second instant, the time elapsed between said two instants, and physical assumptions of the object's trajectory.
